# EUROPEAN PATENT APPLICATION

(11) **EP 1 627 565 A1**
(43) Date of publication of application: **22.02.2006**
(21) Application number: 04381028.2
(22) Date of filing: 10.08.2004
(51) Int. Cl.: A01N 1/02

(54) **Use of flavanol derivatives for the cryopreservation of living cells**

(71) Applicant: Consejo Superior de Investigaciones Cientificas (CSIC), 28006 Madrid (ES); Greenlane Biodevelopments S.L., 08870 Sant Sadumi d'Anoia (ES)
(72) Inventor: Torres Simòn, Josep Lluis, 08031 Barcelona (ES); Alvarez González, Juan Jesûs, 15004 A Coruna (ES)
(74) Representative: Barlocci, Anna

(57) **Abstract**

A medium for storing a biological sample, in particular sperm, oocyte, embryo and stem cells, in a refrigerated, frozen or vitrified state, comprising a balanced salt solution and a 4-thioderivative of flavan-3-ol of formula (I) with cryoprotective effect.

## Description

### Field of the invention

The present invention relates to a medium for storing biological samples in a refrigerated, frozen or vitrified state, comprising flavanol derivatives.

### Background of the invention

The storage of frozen human and animal cells is of paramount importance in many fields.

For instance if the cells are frozen sperm or embryos, storage is important in assisted human reproduction and it is e.g. also important in healing strategies based on the use of stem cells.

The first successful case of cryopreservation of live cells involved spermatozoa. The first human pregnancy with sperm which had been stored in frozen form was accomplished in 1953, when the technique of cryopreservation of human spermatozoa was introduced. In 1963 a method for freezing human semen in liquid nitrogen vapor and its storage at -196 °C was reported. The method allowed the preservation of semen in clinical cryobanks and its use in successful pregnancies resulting in normal births throughout the world. For reviews on the history and current practice of semen cryopreservation see (Anger, Gilbert *et al*. (2003) J. Urol. **170**(4): 1079-1084).

The cellular damage during cryopreservation of human spermatozoa results mainly in a marked decrease in cell motility. Thus, the study of sperm mobility is considered a suitable model for monitoring the performance of cell cryopreservation techniques.

The causes of cellular damage during cryopreservation include the formation of intracellular ice, osmotic changes, bacterial contamination, and oxidative stress. Different substances have been added to the freezing media in order to avoid the said problems. Solutions used for sperm preservation have become standardized and are commercially available. These solutions include the so called cryoprotectants such as glycerol, propanediot, dimethylsulfoxyde or egg-yolk, among others, to avoid the formation of damaging water microcrystals and to minimize the osmotic stress by lowering the salt concentration and by increasing the amount of unfrozen water.

Other substances added to the cryopreservative solutions include energy sources to avoid consumption of intracellular materials; antibiotics to avoid bacterial infections and salts and buffers to optimize osmotic pressure. A typical cryopreservation solution includes a cryoprotectant (e.g. glycerol), energetic sugar (glucose), salts (sodium, magnesium, potassium as their chlorides or sutphates), a methat chelator (EDTA), a pH regulator (buffer, e.g. HEPES), an albumin (e.g. human serum albumin), and an antibiotic.

Recently, oxidative stress and the subsequent production of reactive oxygen species (ROS) has been recognized as another important cause of cell damage, particularly sperm loss of motility and viability. During the process of freezing/thawing, spermatozoa as well as other kinds of cells, suffer cold shock which increases their susceptibility to lipid peroxidation, maybe through depletion of endogenous protecting enzymes such as SOD (superoxide dismutase). This has a negative impact in ageing, shortening the cell life span and effecting the preservation of healthy cells. Some of the components of standard cryopreservation solutions, such as the metal chelator and albumin, may exert some antioxidant effect.

Nevertheless, the addition of natural or synthetic antioxidants to the freezing solution does not appear to improve sperm motility further than a few percentage points (Askari, H. A., J. H.Check *et al*. (1994) Archives of Androtogy **33**(1): 11-15; Park, N. C., H. J. Park *et al*. (2003) Asian Journal of Andrology **5**(3): 195-201; Roca, J., A. Gil Maria, *et al*. (2004) Journal of Andrology **25**(3): 397-405).

The antioxidants, which include Vitamins E and C, and butylated hydroxytoluene, among others, are able to scavenge free radicals and may inhibit lipid peroxidation to some extent but fail to preserve cell viability and motility accordingly. In fact, other works suggest that membrane stress during the freezing operation is the main cause of reduced cell motility (Alvarez, J. G. and B. T. Storey. Journal of Andrology **14**(3): 199-209; Lasso JL, , E. E. Noiles *et al*. Journal of Andrology **15**(3): 255-65.

Whatever the reason might be, despite many advances in cryopreservation methodology, both in freezing techniques and additives (cryoprotectants, antioxidants) a dramatic decrease in cell motility always occurs after thawing. Typically, only around 50% of spermatozoa are mobile upon thawing after being kept frozen for 24 h.

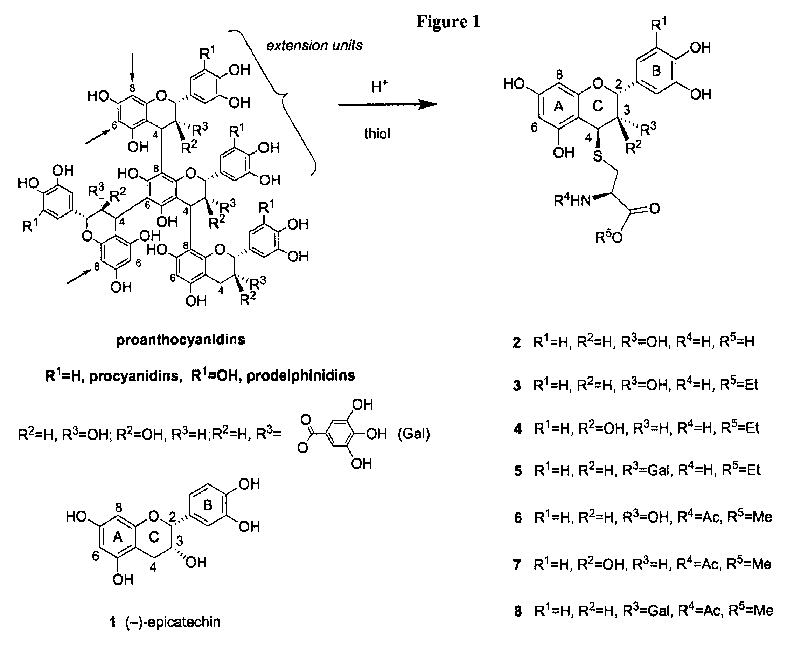

The catechins, also known as flavan-3-ols, belong to a family of compounds called flavonoids. Flavonoids are characterised by a structure with two phenolic rings linked by another cyclic carbon structure with one oxygen (pyran). Said flavonoids exist, in nature, in a free (monomeric) form and in a conjugated form with other flavonoids, sugars and non-flavonoids compounds. The structure of natural flavanols and epicatechin is shown in figure 1 herein.

WO02/051829 describes cisteamine derivatives of flavan-3-ols. WO03/024951 describes another cistein derivatives of flavan-3-ols. One of the described derivatives is shown as structure 2 in figure 1 herein. In both patents is described that the derivatives have antioxidant effects. Nothing is mentioned about any cryoprotective effect of the thioamine derivatives.

WO97/14785 describes a cryoprotective media for sperm cells. It comprises a specific defined class of polysaccharides. On page 26 it is said that the media may comprise other cryoprotective agents such as glycerol etc. and adjunct agents, such as antioxidants, (e.g. vitamin E), flavonoids and others.

### Summary of the invention

The problem to be solved by the present invention is to provide an improved medium for storing a biological sample in a refrigerated, frozen or vitrified state, wherein e.g. cells are less damaged during storage.

In order to solve this problem, the present inventors investigated the possible cryoprotective effect of a natural flavanot ((-)-epicatechin). As for, in the art, other tested antioxidant compounds (e.g. Vitamins E and C), they found that natural flavanot has no significant storage stabilizing cryoprotective effect.

Despite of this, the inventors tried to test the cryoprotective effect of different thioamine derivatives of flavan-3-ols of general formula (I). They found that a media comprising these thioamine derivatives of flavan-3-ols could be used to significantly reduce the cell damage of e.g. frozen stored cell. See e.g. working example 7 herein which illustrates this for frozen sperm cells.

Accordingly, a first aspect of the invention relates to a medium for storing a biological sample in a refrigerated, frozen or vitrified state, comprising a balanced salt solution and a 4-thioderivative of flavan-3-ol of formula (I) with cryoprotective effect: 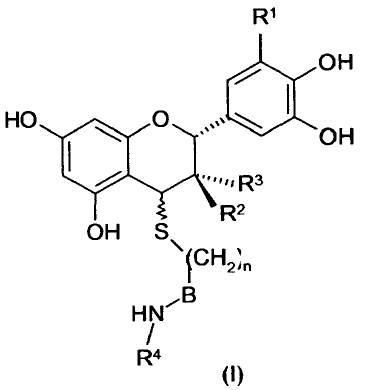
Wherein:
R¹, and R² are independently from one another, equal or different, H or OH.
R³ is different from R², and is H, OH or a group of formula: 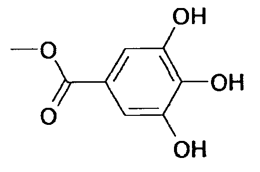
B = single bond or 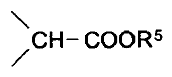
n = 1-6
R⁴ = H, -C(O)-R⁶, linear or branched C₁-C₄ alkyl, or a natural aminoacid selected from the group consisting of alanine, aspartic acid, glutamic acid, phenylalanine, glycine, histidine, isoleucine, lysine, leucine, methionine, asparagine, proline, glutamine, arginine, serine, threonine, valine, tryptophan, tyrosine;
R⁵ = H, linear or branched C₁-C₄ alkyl, or a natural aminoacid selected from the group consisting of alanine, aspartic acid, glutamic acid, phenylalanine, glycine, histidine, isoleucine, lysine, leucine, methionine, asparagine, proline, glutamine, arginine, serine, threonine, valine, tryptophan, tyrosine;
R⁶ = linear or branched C₁-C₄ alkyl;

or a salt thereof, at a concentration sufficient to reduce cellular damage after storage in a refrigerated, frozen or vitrified state.

A second aspect of the invention relates to a method for reducing cellular damage to a biological sample, resulting from storage of said sample in a refrigerated, frozen or vitrified state, comprising the steps of
(a) combining a medium according to any of the preceding claims, and said biological sample, wherein said derivative of flavan-3-ol is in an amount effective to reduce said damage; and
(b) storing said sample in a refrigerated, frozen or vitrified state.

An advantage of using the derivative of ftavan-3-ol (beside their very good cryoprotective stabilizing effect) is that the compounds are known to be non toxic. Flavan-3-ols are in numerous edible products and human and animals have eaten them for numerous years without any health problems.

### Brief description of the drawings

Figure 1 shows the depotymerisation of proanthocyanidins (polymeric flavan-3-ols). Proanthocyanidins comprise both procyanidins (proanthocyanidins in which R¹ is H) and prodelphinidins (proanthocyanidins in which R¹ is OH). The arrows indicate putative polymerisation positions.

It shows also the 4-thio-derivatives 2, 3, 4, 5, 6, 7, and 8, which correspond to the compound of the example of the patent application WO 03024951, and to compounds of examples 1, 2, 3, 4, 5 and 6 of the present invention, respectively.

Embodiments of the present invention are described below, by way of examples only.

### Detailed description of the invention

### Biological sample

A biological sample, as used herein, includes cells, tissues or organs from human or animal origin as well as microorganisms and plant embryos.

Human and animal cells as used herein include human and mammalian, avian or piscian cells. Mammalian cells as used herein include, but are not limited to, cells obtained from bovine, canine, equine, porcine, ovine or rodent species.

Human and animal cells as used herein include, but are not limited to, sperm, oocytes, embryos and stem cells, but also blood cells, such as red blood cells, CNS cells or hepatocites.

As used herein, human or animal tissues, include blood, bone, cartilage, heart valves, bone marrow, blood vessels, skin, corneas or islets of langerhans.

As used herein, human or animal organs include heart, liver or kidney.

In a preferred embodiment, cells are selected from the group consisting of sperm, oocyte, embryo and stem cells. In a still more preferred embodiment, cells are selected from the group consisting of sperm and embryo.

As used herein, "embryo" refers to an animal in early stages of growth following fertilization up to the blastocyst stage. An embryo is characterized by having totipotent cells, which are nondifferentiated. In contrast, somatic cells of an individual are cells of a body that are differentiated and are not totipotent.

As used herein "stem cell" refers to a population of cells having identical genetic material. Each cell is totipotent and, if fused with a nonfertilized oocyte, generates genetically identical animals.

### Refrigerated, frozen or vitrified state

By refrigerated, frozen and vitrified state, as used herein, is meant states achieved by three modes of tow temperature preservation: refrigeration (or hypothermic preservation), freezing preservation and vitrification.

Refrigeration is generally an appropriate means for short-term storage, white freezing or vitrification are generally appropriate means for long or short-term storage.

In hypothermic preservation, biological samples are maintained at a temperature above freezing. It is mostly used for the preservation of whole organs. However, it is also recommended for the short term transportation of cells.

Freezing preservation and vitrification are known as cryopreservation. It is mostly used for long or short-term storage of cells.

Vitrification (Rall WF, Fahy GM.; *Nature* **1985,** 313, 573-575) is a cryopreservation method which requires complete suppression of ice formation. It is based on a fast freezing in a mixture of cryoprotectants at high concentrations, which at low temperatures increase their viscosity forming a glass, without ice formation.

### Medium for storing the biological sample

The medium for storing the biological sample comprises 4-thioderivative of flavan-3-ol of formula (I) and a balanced salt solution e.g. a standard balanced salt solution.

The medium for storing the biological sample in a refrigerated state may further comprise nonelectrolytes (sucrose, raffinose, saccharoids), citrate and magnesium chelates or high molecular weight anions (lactobionates) are used to prevent intracellular edema. Buffers (phosphate, histidine, citrate), manitol or glutathione and glutamate are used to address the issues of acidosis, free radical production and contracture, respectively. After preservation the cells are washed with solutions that have high energy substrates added for energy regeneration and compounds that reduce apoptosis.

The medium for storing the biological sample in a refrigerated state may be a standard solution for storing biological samples in a refrigerated state supplemented with a compound of formula (I). Standard solution for storing biological samples in a refrigerated state include: University of Wisconsin solution (UW), Bretschneider solution (HTK), Stanford solution (STF), and Euro-Collins solution (EC). Solutions that are based on the extracellular composition include: Celsior solution, St. Thomas Hospital solutions 1 and 2 (STH-1, STH- 2), the modified University of Wisconsin solution (UW-1). These solutions have slightly different known indications.

Standard balanced salt media include, but are not limited to, Tyrode's albumin lactate phosphate (TALP), , Earle's buffered salts, Biggers, Whitten and Whitingham (BWW), CZB, T6, Earle's MTF, KSOM, SOF media. Formulas for these media are well known, and preformulated media may be obtained commercially (e.g., Gibco Co. or Fertility Technologies, Natick, MA). In addition, a zwitterionic buffer (e.g., MOPS, PIPES, HEPES) may be added.

In a preferred embodiment, the medium is for storing samples of sperm in a refrigerated state. Thus, the medium may be a standard solution for storing sperm in a refrigerated state, supplemented with a compound of formula (I).

In a preferred embodiment, the medium further contains a cryoprotectant, for storing the sample in a frozen or vitrified state. Such cryoprotectants include permeating and nonpermeating compounds. Most commonly, DMSO, glycerol, propylene glycol, ethylene glycol, or the like are used. Other permeating agents include propanediol, dimethylformamide and acetamide. Nonpermeating agents include polyvinyl alcohol, polyvinyl pyrrolidine, anti-freeze fish or plant proteins, carboxymethylcellulose, serum albumin, hydroxyethyl starch, Ficoll, dextran, gelatin, albumin, egg yolk, milk products, lipid vesicles, or lecithin. Adjunct compounds that may be added include sugar alcohols, simple sugars (e.g., sucrose, raffinose, trehalose, galactose, and lactose), glycosaminoglycans (e.g., heparin, chrondroitin sulfate), butylated hydroxy toluene, detergents, free-radical scavengers, and anti-oxidants (e.g., vitamin E, taurine), amino acids (e.g., glycine, glutamic acid). Glycerol is preferred for sperm freezing, and ethylene glycol or DMSO for oocytes, embryos or stem cetts. Typically, glycerol is added at 3-15%; other suitable concentrations may be readily determined using the methods and assays described herein. Other agents are added typically at a concentration range of approximately 1-5%. Proteins, such as human serum albumin, bovine serum albumin, fetal bovine serum, egg yolk, skim milk, gelatin, casein or oviductin, may also be added.

Such medium may also be prepared by adding the 4-thioderivative of flavan-3-ol of formula (I) to a comercial cryopreservative solution, such as: Nidacon Sperm CryoProtect.

Cryoprotective medium is typically added slowly to the cells in a drop wise fashion. The addition of the cryoprotective medium may be done at 4°C, 37°C or at room temperature, depending on the permeability of the cryoprotectant used.

Following suspension of the cells in the cryoprotective medium (e.g., for storage), the container is seated and subsequently either refrigerated or frozen. Briefly, for refrigeration, the sample is placed in a refrigerator in a container filled with water for one hour or until the temperature reaches 4°C. Samples are then placed in Styrofoarn containers with cool packs and may be shipped for insemination, in the case of sperm, the next day. If the sample is to be frozen, the cold sample is aliquoted into cryovials or straws and placed in the vapor phase of liquid nitrogen for one to two hours, and then plunged into the liquid phase of liquid nitrogen for long-term storage or frozen in a programmable computerized freezer. Frozen samples are thawed by warming in a 37°C water bath and are directly inseminated or washed prior to insemination. Other cooling and freezing protocols may be used.

In a preferred embodiment, vitrification is used for storing oocytes and embryos. Vitrification involves dehydration of the oocyte or embryos using sugars, Ficoll, or the like. The oocyte or embryo is then added to a cryoprotectant and rapidly moved into liquid nitrogen.

Within the present invention, biological samples, and particularly, sperm, oocytes, or embryos, may be prepared and stored as described above.

### 4-thioderivatives of flavan-3-ol of formula (I)

By linear or branched C₁-C₄ alkyl as used herein is meant a lineal or branched alkyl group which contains up to 4 atoms of carbon. Thus it includes, for example, methyl, ethyl, propyl, isopropyl, butyl, isobutyl, *sec*-butyl and *tert*-butyl.

The compounds of formula (I) are derivatives of the following natural flavan-3-ols: Epicathechin, epigallocatechin, catechin, gallocatechin and the corresponding 3-*O*-gallates.

In the compounds of formula (I), when B is a single bond then n is preferably 2; and when B is 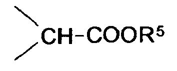
then n is preferably 1. R⁴ is preferably H or CH₃CO-. R⁵ is preferably H, methyl or ethyl.

The compounds of formula (I) have a chiral centre in the 4 position. It may have an alpha or beta configuration. It is understood that the invention includes such stereoisomers and mixtures thereof in any proportion that possess cryoprotective effect.

The compounds of formula (I) with a beta configuration in the four position (i.e. 4B isomers) are particularly preferred.

In a more preferred embodiment, compounds of formula (I) are selected from 4B-[S-(*N*-acetyl-*O*-methyl-cysteinyl)]epicatechin and 4β-(S-cysteinyl)epicatechin.

Salts of compounds of formula (I) include salts of alkaline metals such as sodium or potassium and salts of alkaline earth metals such as calcium or magnesium, as well as acid-addition salts formed with inorganic and organic acids such hydrochlorides, hydrobromides, sulphates, nitrates, phosphates, formiates, mesylates, citrates, benzoates, fumarates, maleates, lactates, succinates and trifluoroacetates among others.

Salts of compounds of formula (I) may be prepared by reaction of a compound of formula (I) with a suitable quantity of a base such as sodium, potassium, calcium or magnesium hydroxyde, or sodium methoxide, sodium hydride, potassium tert-butoxyde and the like in solvents such as ether, THF, methanol, ethanol, tert-butanol, isopropanol, dioxane, etc. , or else in a mixture of solvents. The addition salts, where applicable, can be prepared by treatment with acids, such as hydrochloric, hydrobromic, sulphuric, nitric, phosphoric, formic, methanesulphonic, citric, benzoic, fumaric, maleic, lactic, succinic or trifluoroacetic acid, in solvents such as ether, alcohols, acetone, THF, ethyl acetate, or mixtures of solvents.

Compounds of formula (la) are compounds of formula (I) wherein n is 2, B is a single bond and R⁴ is H. Compounds of formula (la) were first described in the international patent application WO02051829A1 as antioxidant agents and may be obtained according to the methods described therein and in Torres, J. L.; Bobet, R. *J. Agric. Food Chem.* **2001, *49*, 4627.** The compounds of formula (I) wherein B is a single bond and R4 is H and n is 1 or 3 to 6 are new and may be obtained in a similar way as described for compounds of formula (Ia), but substituting the thioethylamine (n=2) by the corresponding thioalkylamine wherein said alkyl is (CH₂)ₙ and n is 1 or 3 to 6. The compounds of formula (I) wherein B is a single bond and R⁴ is -C(O)-R⁶, linear or branched C₁-C₄ alkyl, or a natural aminoacid selected from the group defined above, are new and may be obtained in a similar way as described in WO02051829A1, but substituting the thioethytamine (n=2) by the corresponding compound of formula (III): R⁴HN-(CH₂)ₙ-SH, wherein R⁴ and n are as defined above.

Compounds of formula (Ib) are compounds of formula (I) wherein n is 1, R⁴ is H and B is CH-COOH. Compounds of formula (Ib) were first described in WO 03024951 as antioxidant agents and may be obtained according to the methods described therein and in Torres, J. L. *et al. Bioorg. Med. Chem.* **2002,** *10,* 2497. The compounds of formula (I) wherein R⁴ is H and B is CH-COOH and n is 2 to 6 are new and may be obtained in a similar way as described for compounds of formula (Ib), but using instead of the cysteine (n=1) an aminoacid of formula (IV) 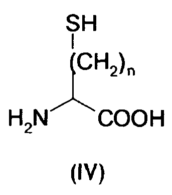
wherein n is 2 to 6.

Preferred methods include, but are not limited to, those described above. The reactions are carried out in the solvents appropriate for the reagents and materials used and suited for the transformations carried out. An expert in organic synthesis will understand that the functional groups present in the molecule must be consistent with the proposed transformations. This may in some cases require modifying the order of the synthesis steps or selecting one particular method rather than another, in order to obtain the desired compound of the invention. Moreover, in some of the procedures described above it may be desirable or necessary to protect the reagent functional groups present in the compounds or intermediates of this invention with conventional protecting groups. Various protecting groups and procedures for introducing them and removing them are described in Greene and Wuts (Protective Groups in Organic Synthesis, Wiley and Sons, **1999**).

### Cellular damage resulting from storage

There are different methods for evaluating the cellular damage described in the literature. Some of them are very specific and dependant on the kind of cell. It is within the skilled person's general knowledge to identify a suitable method with respect to a specific cell type of interest. In other words, to measure relevant viability parameters of a cell population before and after storage to thereby identify the degree of cellular damage after storage.

Below are described preferred methods for evaluating the cellular damage resulting from storage of sperm and embryos.

### Methods for evaluating the reduced cellular damage resulting from storage of sperm

The function of sperm is to fertilize an oocyte. The cellular damage resulting from storage of sperm may decrease sperm capability for performing this function. This function may be assayed by a broad range of measurable cell functions. Such assayable functions include sperm motility, sperm viability, membrane integrity of sperm, in vitro fertilization, sperm chromatin stability, survival time in culture, penetration of cervical mucus, as well as sperm penetration assays and hemizona assays.

Sperm motility is one function that may be used to assess sperm function and thus fertilization potential. Herein this is a preferred method. Motility of sperm is expressed as the total percent of motile sperm, the total percent of progressively motile sperm (swimming forward), or the speed of sperm that are progressively motile. These measurements may be made by a variety of assays, but are conveniently assayed in one of two ways. Either a subjective visual determination is made using a phase contrast microscope when the sperm are placed in a hemocytometer or on a microscope slide, or a computer assisted semen analyzer is used. Under phase contrast microscopy, motile and total sperm counts are made and speed is assessed as fast, medium or slow. Using a computer assisted semen analyzer (Hamilton Thom, Beverly, MA), the motility characteristics of individual sperm cells in a sample are objectivety determined. Briefly, a sperm sample is placed onto a slide or chamber designed for the analyzer. The analyzer tracks individual sperm cells and determines motility and velocity of the sperm. Data is expressed as percent motile, and measurements are obtained for path velocity and track speed as well.

Sperm viability is measured in one of several different methods. By way of example, two of these methods are staining with membrane exclusion stains and 1 5 measurement of ATP levels. Briefly, a sample of sperm is incubated with a viable dye, such as Hoechst 33258 or eosin-nigrosin stain. Cells are placed in a hemocytometer and examined microscopically. Dead sperm with disrupted membranes stain with these dyes. The number of cells that are unstained is divided by the total number of cells counted to give the percent live cells. ATP levels in a sperm sample are measured by lysing the sperm and incubating the lysate with luciferase, an enzyme obtained from fireflies, which fluoresces in the presence of ATP. The fluorescence is measured in a luminometer (Sperm Viability Test; Firezyme, Nova Scotia, Canada). The amount of fluorescence in the sample is compared to the amount of fluorescence in a standard curve allowing a determination of the number of live sperm present in the sample.

Membrane integrity of sperm is typically assayed by a hypo-osmotic swell test which measures the ability of sperm to pump water or salts if exposed to nonisotonic environments. Briefly, in the hypo-osmotic swell test, sperm are suspended in a solution of 75 mM fructose and 25 mM sodium citrate, which is a hypo-osmotic (150 mosm) solution. Sperm with intact, healthy membranes pump salt out of the cell causing the membranes to shrink as the cell grows smaller. The sperm tail curls inside this tighter membrane. Thus, sperm with curled tail are counted as live, healthy sperm with normal membranes. When compared to the total number of sperm present, a percent of functional sperm may be established.

The degree of membrane integrity is preferably determined by lipid peroxidation (LPO) measurements which assess sperm membrane damage generated by free radicals released during handling. Lipid membrane peroxidation is assayed by incubating sperm with ferrous sulfate and ascorbic acid for one hour in a 37°C water bath. Proteins are precipitated with ice-cold trichtoroacetic acid. The supernatant is collected by centrifugation and reacted by boiting with thiobarbituric acid and NaOH. The resultant matondialdehyde (MDA) formation is quantified by measuring absorbance at 534 nm as compared to an MDA standard (M. Bell et al.. J. Andrology 14:472-478, 1993)). LPO is expressed as nM MDA/10⁸ sperm. A stabilizing effect of PCAGHs results in decreased LPO production.

The stability of chromatin DNA is assayed using the sperm chromatin 1 5 sensitivity assay (SCSA). This assay is based on the metachrornatic staining of single and double stranded DNA by acridine orange stain, following excitation with 488 nm light. Green fluorescence indicates double strand DNA, and red fluorescence indicates single strand DNA. The extent of DNA denaturation in a sample is expressed as (α and calculated by the formula (α = red/(red+green). In all cases, sperm are mixed with TNE buffer (0.01 M Trisaminomethane-HCl, 0.015M NaCl, and 1 mM EDTA) and flash frozen. Sperm samples are then subjected to 0.01% Triton-X, 0.08N HCl and 0.15M NaCl, which induces partial denaturation of DNA in sperm with abnormal chromatin. Sperm are stained with 6 g/ml acridine orange and run through a flow cytometer to determine cc.

In vitro fertilization rates are determined by measuring the percent fertilization of oocytes in vitro. Maturing oocytes are cultured in vitro in Ml 99 medium plus 7.5% fetal calf serum and 50 µg/ml luteinizing hormone for 22 hours. Following culture for 4 hours, the sperm are chemically capacitated by adding 10 IU of heparin and incubated with oocytes for 24 hours. At the end of the incubation, oocytes are stained with an aceto-orcein stain or equivalent to determine the percent oocytes fertilized. Alternatively, fertilized oocytes may be left in culture for 2 days, during which division occurs and the number of cleaving embryos (ie., 2 or more cells) are counted.

Survival time in culture of sperm (time to loss of motility) is another convenient method of establishing sperm function. This parameter correlates well with actual fertility of a given mate. Briefly, an aliquot of sperm is placed in culture medium, such as Tyrode's medium, pH 7.4 and incubated at 37°C, 5% CO₂, in a humidified atmosphere. At timed intervals, for example every 8 hours, the percentage of motile sperm in the culture is determined by visual analysis using .an inverted microscope or with a computer assisted sperm analyzer. As an endpoint, a sperin sample is considered no longer viable when less than 5% of the cells have progressive motility.

Another parameter of sperm function is the ability to penetrate cervical mucus. This penetration test can be done either in vitro or in vivo. Briefly, in vitro, a commercial kit containing cervical mucus (Tru-Trax, Fertility Technologies, Natick, MA), typically bovine cervical mucus, is prepared. Sperm are placed at one end of the track and the distance that sperm have penetrated into the mucus after a given time period is determined. Alternatively, sperm penetration of mucus may be measured in vivo in women. At various times post-coitus, a sample of cervical mucus is removed and examined microscopically for the number of sperm present in the sample. In the post-coital test, improved sperm function is established if more sperm with- faster velocity are seen in the mucus sample after exposure to a PCAGH lubricant versus a sample of mucus from the patient after exposure to a control lubricant.

Other assays of sperm function potential include the sperm penetration and hemizona assays. In the sperm penetration assay, the ability of sperm to penetrate into an oocvte is measured. Briefly, commercially available zona free hamster oocytes are used (Fertility Technologies, Natick, MA). Hamster oocytes are suitable in this assay for sperm of any species. Capacitated sperm, such as those cultured with bovine serum albumin for 18 hours, are incubated for 3 hours with the hamster oocytes. Following incubation. oocytes are stained with acetolacmoid or equivalent stain and the number of sperm penetrating each oocyte is counted microscopically. A hernizona assay measures the ability of sperm to undergo capacitation and bind to an oocyte. Briefly, in this assay, live normal sperm are incubated in media with bovine serum albumin, which triggers capacitation. Sperm are then incubated with dead oocytes which are surrounded by the zona pellucida, an acellular coating of oocytes. Capacitated sperm bind to the zona and the number of sperm binding is counted microscopically

### Methods for evaluating the reduced cellular damage resulting from storage of embryos

For embryos, viability and quality is ascertained by a correct embryo cell division rate during culture time, which should be: day 1, two-cell stage, day 2, four-cell stage; day 3, eight-cell stage; and day 4, blastocyst stage.

The derivatives of flavan-3-ol are used in the media at a concentration sufficient to reduce cellular damage after storage in a refrigerated, frozen or vitrified state. Based on the present disclosure and the general knowledge of the skilled person it is routine work for the skilled person to adequately adjust the flavan-3-ol concentration to a degree of reduced cellular damage of interest.

However, one of the advantages of the derivatives of flavan-3-ol as described herein is that they have a very good cryoprotective effect and one may therefore use a relatively low concentration and still get a significant reduced cellular damage.

Accordingly, a embodiment of the invention is wherein the medium for storing a biological sample has a concentration of the derivatives of flavan-3-ol from 15 µg/mL to 500 µg/mL, more preferably from 25 µg/mL to 200 µg/mL and most preferably from from 50 µg/mL to 150 µg/mL.

The concentration is measured in the stored sample, i.e. the media and the biologic sample comprising the cells to be stored.

In a preferred embodiment the reduction of cell damage after storage represents an improvement of at least 5% as compared to storage under identical conditions in an identical control storage media without the derivatives of flavan-3-ol as described herein.

In other words, if e.g. the viability of cells (e.g. sperm cells) after storage in a media without the derivatives of flavan-3-ol is 47% and the viability of the cells after storage in the same media comprising the derivatives of flavan-3-ol is 70% the reduction of cell damage after storage represents an improvement of 49%. Table 1 of example 7 illustrates such a significant 49% improvement for storage of sperm cells.

Accordingly, in a more preferred embodiment the reduction of cell damage after storage represents an improvement of at least 10% as compared to storage under identical conditions in an identical control storage media without the derivatives of flavan-3-ol as described herein, even more preferably an improvement of at least 25% and most preferably an improvement of at least 35%.

### 4-thio derivatives of flavan-3-ol of general formula (II)

The 4-thio derivative of flavan-3-ol of general formula (II) are new.

Accordingly, as compounds as such they represent a separate independent aspect of the invention.

The 4-thio derivative of flavan-3-ol of general formula (II) are new: 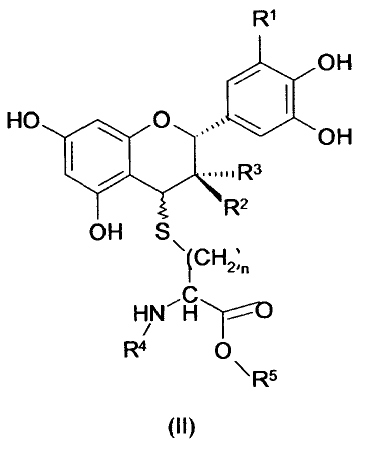
wherein:
R¹, R² and R³ are as defined above,
n = 1-6,
R⁴ = H, -C(O)-R⁶, linear or branched C₁-C₄ alkyl, or a natural aminoacid selected from the group consisting of alanine, aspartic acid, glutamic acid, phenylatanine, glycine, histidine, isoleucine, lysine, leucine, methionine, asparagine, proline, glutamine, arginine, serine, threonine, valine, tryptophan, tyrosine;
R⁵ = H, linear or branched C₁-C₄ alkyl, or a natural aminoacid selected from the group consisting of alanine, aspartic acid, glutamic acid, phenylalanine, glycine, histidine, isoleucine, lysine, leucine, methionine, asparagine, proline, glutamine, arginine, serine, threonine, valine, tryptophan, tyrosine;
R⁶ = linear or branched C₁-C₄ alkyl,

provided that when R⁴ is H, then R⁵ is different from H.

Preferably, in the compounds of general formula (II), n is 1. R⁴ is preferably H or CH₃CO-. R⁵ is preferably H, methyl or ethyl.

The compounds of formula (II) have a chiral centre in the 4 position. It may have an alpha or beta configuration. It is understood that the invention includes such stereoisomers and mixtures thereof in any proportion that possess cryoprotective effect.

The compounds of formula (II) with a beta configuration in the four position (i.e. 4B isomers) are particularly preferred.

Salts of compounds of formula (II) include salts of alkaline metals such as sodium or potassium and salts of alkaline earth metals such as calcium or magnesium, as well as acid-addition salts formed with inorganic and organic acids such hydrochlorides, hydrobromides, sulphates, nitrates, phosphates, formiates, mesylates, citrates, benzoates, fumarates, maleates, lactates, succinates and trifluoroacetates among others.

Salts of compounds of formula (II) may be prepared by reaction of a compound of formula (II) with a suitable quantity of a base such as sodium, potassium, calcium or magnesium hydroxyde, or sodium methoxide, sodium hydride, potassium tert-butoxyde and the like in solvents such as ether, THF, methanol, ethanol, tert-butanol, isopropanol, dioxane, etc. , or else in a mixture of solvents. The addition salts, where applicable, can be prepared by treatment with acids, such as hydrochloric, hydrobromic, sulphuric, nitric, phosphoric, formic, methanesulphonic, citric, benzoic, fumaric, maleic, tactic, succinic or trifluoroacetic acid, in solvents such as ether, alcohols, acetone, THF, ethyl acetate, or mixtures of solvents.

In a more preferred embodiment, this compound of formula (II) is 4 -[S*-*(*N-*acetyl-*O*-methyl-cysteinyl)]epicatechin.

Preferred methods for preparing compounds of formula (II) include, but are not limited to, those described below. The reactions are carried out in the solvents appropriate for the reagents and materials used and suited for the transformations carried out. An expert in organic synthesis will understand that the functional groups present in the molecule must be consistent with the proposed transformations. This may in some cases require modifying the order of the synthesis steps or selecting one particular method rather than another, in order to obtain the desired compound of the invention. Moreover, in some of the procedures described below it may be desirable or necessary to protect the reagent functional groups present in the compounds or intermediates of this invention with conventional protecting groups. Various protecting groups and procedures for introducing them and removing them are described in Greene and Wuts (Protective Groups in Organic Synthesis, Wiley and Sons, 1999).

Compounds of formula (II), like compounds of formula (Ib), are derivatives of natural flavan-3-ols epicathechin, epigallocatechin, catechin, gallocatechin and the corresponding 3-*O*-gallates. Therefore, compounds of formula (II) may be prepared by a process similar to the process for preparing compounds of formula (Ib), described in Torres, J. L. *et al. Bioorg. Med. Chem.* **2002**, *10*, 2497 and WO 03024951. It comprises the same three phases: extraction phase, thiolysis phase and finally isolation and purification, described therein in detail. While the same extraction phase of polyphenols from the first plant source may be applied, the thiolysis phase is not performed with cisteine, but with a different aminoacid derivative.

Thus, compounds of formula (II) may be obtained by acid depolimerisation of an extract containing procyanidins/prodelfinidins treated with a compound of general formula (V): 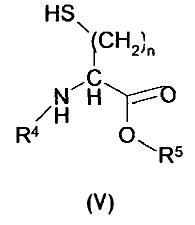
wherein n, R⁴ and R⁵ are as defined above, followed by purification, essentially as described in Torres, J. L. *et al. Bioorg. Med. Chem.* **2002**, *10,* 2497.

Said purification typically comprises preparative RP-HPLC (reversed-phase high performance liquid chromatography) fractionation.

Compounds of formula (II) wherein R⁴ is H, may be separated from the crude depolymerisation mixture on a strong cation-exchange resin (e.g. MacroPrep™ High S 50 µm) by taking advantage of the free amino function.

Compounds of formula (II) wherein R⁴ is as defined above except H, may be separated from the crude depolymerisation mixture by preparative RP-HPLC fractionation, done directly from the depolymerised mixture.

Compounds of formula (II) wherein R⁵ is methyl may also be obtained from a compound of formula (V), wherein R⁵ is H, if the depolimerisation conditions are 60°C, HCl, methanol, 15 min.

Typically, compounds with the 4 configuration are the major isomers obtained irrespective of the 2,3-stereochemistry.

Compounds of formula (III), (IV) and (V) wherein R⁴ and R5 are aminoacids selected from the group defined above, may be obtained from the corresponding compounds of formula (III), (IV) and (V) wherein R⁴ and R⁵ are H, using reactions well known in the chemistry of peptides.

The compounds of formula (III), (IV) and (V) wherein R⁴ and R⁵ are as defined above, except that they are not aminoacids, are commercial, are extensively described in the literature or can be prepared by methods analogous to those known in the state of the art from products commercially available.

### Examples:

### Acid depolymerisation of procyanidins in the presence of thiols.

To obtain the thio-conjugates of examples 1 to 6 the solvent (water saturated with ethyl acetate) was eliminated from an aliquot (400 mL, 4 g gallic acid equivalents, 6 g estimated polyphenols by weight, coming from 3.2 kg of grape byproduct) of the source of procyanidins. The pellet was then dissolved in MeOH (400 mL) and dried. This operation was repeated three times in order to eliminate moisture. The resulting syrupy residue was dissolved in MeOH (400 mL) and a solution of the appropriate cysteine derivative (20 g) and 37% HCl (10 mL) in MeOH (400 mL) was added. The mixture was kept at 65°C for 20 min under agitation. The reaction was then quenched with cold water (3.2 L).

### Ion-exchange separation of the O-ethyl-cysteinyl derivatives from the depolymerised mixtures and fractionation by preparative RP-HPLC.

To set-up the separation conditions at milligram scale semi-preparative runs were performed on a 6 mL bed volume column loaded with MacroPrep™ High S resin. The preparative separations were performed on a 105 mL bed volume column loaded with the same stationary phase. The eluents were [A]: 20 mM sodium phosphate, pH 2.3 buffer/EtOH (13:7) and [B]: 20 mM sodium phosphate, pH 2.3 buffer/EtOH (3:2), 100 mM NaCl. The column was equilibrated with eluent [A], loaded with the quenched depotymerised mixture (500 mL) and washed with [A] (500 mL, 4.75 bed volumes). The retained flavan-3-ol-derivatives were released with 500 mL (4.75 bed volumes) of eluent [B]. The column was then washed with 7.14 bed volumes (750 mL) of 20 mM sodium phosphate buffer, pH 2.25 /EtOH (3:2), 1 M NaCl. The operation was repeated (7 times total) until the whole mixture was consumed. The separation process was monitored by analytical RP-HPLC on a VYDAC™ C₁₈ column eluted with a binary system, [C]: 0.10% (v/v) aqueous TFA, [D]: 0.09% (v/v) TFA in water/CH₃CN (1:4) under isocratic conditions 19 % [D] at a flow rate of 1.5 mL/min and detection at 214nm, 0.016 absorbance units full scale (aufs). The eluates containing the corresponding conjugate were pooled (3.5 L), the solvent volume was reduced under vacuum down to 1.6 L, and water was added up to a final volume of 3.2 L. The RP-HPLC profile of the pooled eluates as well as the initial and final washing steps were recorded on the same analytical system under gradient conditions 8 to 23% [D] over 45 min at a flow rate of 1.5 mL/min with detection at 214nm.

The mixture containing the *O*-ethyl-cysteinyl conjugates of examples 1 to 3 was fractionated on a preparative RP-HPLC cartridge filled with VYDAC™ C18 stationary phase by a CH₃CN gradient in 0.10% (v/v) aqueous TFA (4-20% CH₃CN over 45 min). The solution (3.2 L) was processed in four portions of - 800 mL each. Fractions enriched in each of the three compounds were obtained: fraction I, 9-11% CH₃CN, compound of example 2; fraction II, 12-16% CH₃CN, compound 1; fraction III, 17-19% CH₃CN, compound 3.

### Purification of the O-ethyl cysteinyl derivatives

The 4β-[S-(*O*-ethyl-cysteinyl)]flavan-3-ols were purified from fractions I-III by preparative RP-HPLC and identified by mass spectrometry and nuclear magnetic resonance.

### Example 1: 4 -[S-(O-ethyl-cysteinyl)]epicatechin

Fraction II (4.3 L) from reversed-phase fractionation was concentrated (2.3 L final volume) under vacuum to eliminate most of the CH₃CN, loaded onto the preparative cartridge and eluted using a CH₃CN gradient (4 to 20% over 60 min) in triethylamine phosphate pH 2.25 buffer at a flow rate of 100 mL/min, with detection at 230 nm. The resulting fractions enriched with 3 were pooled, diluted with water (1:1) and re-chromatographed on the same cartridge by a gradient (2 to 18% [D] over 30 min). Compound 3 eluted at 15-18% CH₃CN. Analysis of the fractions was accomplished under isocratic conditions in 0.10% (v/v) aqueous TFA/CH₃CN using the VYDAC™ C₁₈ column, solvent system, flow rate and detection described above with isocratic elution at 19% [D]. The pure fractions were pooled and desalted by a fast CH₃CN gradient in 0.10% (v/v) aqueous TFA on the same cartridge. 4 -[*S*-(*O*-ethyl-cysteinyl)]epicatechin (354 mg) was obtained as the trifluoroacetate by lyophilisation. ES-MS, positive ions, m/z 438.1 (M+1)⁺, calculated for C₂₀H₂₄N₁O₈S₁ (M+H)⁺ 438.1. ¹H-NMR ((CD₃)₂CO + 3 drops D₂O, 300 MHz): 1.24 (3H, t *J*=7.2, O-CH₂₋CH₃); 3.93 (1H, d *J*=2.1 Hz, 4-H 3, 4-*trans* configuration); 4.06 (1H, dd *J*=2.4, 0.9 Hz, 3-H); 4.26 (2H, quadruplet *J*=7.2, 1.5 Hz, O-CH₂-CH₃); 4.71 (1H, m, S-CH₂-CH<); 5.09 (1H, s, 2-H 2, 3-*cis* configuration); 5.90 (1H, d *J*=2.4 Hz, 8-H); 6.09 (1H, d *J*=2.4 Hz, 6-H); 6.80-6.81 (2H, m, 5'-H, 6'-H); 7.04 (1H, d *J*=1.8 Hz, 2'-H). Purity (>95%) was ascertained by RP-HPLC on a RPC C2/C18, 3 m column; elution, [C]: 0.10% (v/v) aqueous TFA, [D]: 0.09% (v/v) TFA in water/CH₃CN (1:4), gradient 8 to 23% [D] over 45 min at a flow rate of 200 L/min with simultaneous detection at 214, 280 and 320 nm.

### Example 2: 4 -[S-(O-ethyl-cysteinyl)]catechin

Fraction I from reversed-phase fractionation was concentrated as stated in example 1, loaded onto the preparative cartridge and eluted using a CH₃CN gradient (2 to 18% over 60 min) in triethylamine phosphate pH 2.25 buffer, at a flow rate of 100 mL/min, with detection at 230 nm. Analysis of the fractions was accomplished under isocratic conditions in 0.10% (v/v) aqueous TFA/CH₃CN using the VYDAC™ C₁₈ column, solvent system, flow rate and detection described above with isocratic elution at 19% [D]. The best fractions were pooled, diluted, re-loaded onto the cartridge and eluted with a CH₃CN gradient (2 to 18% over 60 min) in triethylamine phosphate pH 5.62 buffer. The purest fractions were pooled, desalted with a steep CH₃CN gradient in 0.10% (v/v) aqueous TFA and lyophilised. Then the preparation was re-chromatographed on a semi-preparative Perkin-Elmer C18 cartridge eluted with 18% CH₃CN in 0.10% (v/v) aqueous TFA under isocratic conditions. After pooling the best fractions and lyophilization, 4 -[*S*-(*O*-ethyl-cysteinyl)]catechin (68 mg) was obtained as the trifuoroacetate. ES-MS, positive ions, *m*/*z* 438.1 (M+1)⁺, calculated for C₂₀H₂₄N₁O₈S₁ (M+H)⁺ 438.1. ¹H-NMR ((CD₃)₂CO + 3 drops D₂O, 300 MHz): 1.24 (3H, t *J*=7.0, O-CH₂-CH₃); 4.06 (1H, 2d *J*= 9.6, 2.4 Hz, 3-H 2, 3*-trans* configuration); 4.23 (1H, d J=2.4 Hz, 4-H 3, 4-*cis* configuration); 4.26 (2H, quadruplet *J*=7.0, 2.4 Hz, O-CH₂-CH₃) ; 4.72-4.76 (1H, m, S-CH₂-CH<; 1H, 2-H); 5.89 (1H, d *J*=2.4 Hz, 8-H); 6.10 (1H, d *J*=2.4 Hz, 6-H); 6.62 (2H, m, 5'-H, 6'-H); 6.91 (1H, s, 2'-H). Purity (>93%) was ascertained by RP-HPLC on the system described for compound of example 1.

### Example 3: 4 -[S-(O-ethyl-cysteinyl)]epicatechin 3-O-gallate

Fraction III from reversed-phase fractionation was concentrated as stated in example 1, loaded onto the preparative cartridge and eluted using a CH₃CN gradient (8 to 24% over 60 min) in triethylamine phosphate pH 2.25 buffer, at a flow rate of 100 mL/min, with detection at 230 nm. Fractions were analysed under isocratic conditions in 0.10% (v/v) aqueous TFA/CH₃CN using the column, solvent system, flow rate and detection described above with elution at 21% [D]. The best fractions were pooled, diluted, re-loaded onto the cartridge and eluted with a CH₃CN gradient (8 to 24% over 60 min) in triethylamine phosphate pH 5.62 buffer. The purest fractions were pooled and re-chromatographed with a CH₃CN gradient (10 to 26% over 30 min) in 0.10% (v/v) aqueous TFA. Then the preparation was re-chromatographed on a semi-preparative Perkin-Elmer C18 cartridge eluted with a CH₃CN gradient (12 to 28% over 30 min) in 0.10% (v/v) aqueous TFA. After lyophilization, 4 -[S-(O-ethylcysteinyl)]epicatechin 3-*O*-gallate (33 mg) was obtained as the trifluoroacetate. ES-MS, positive ions, *m*/*z* 590.1 (M+1)⁺ calculated for C₂₇H₂₈N₁O₁₂S₁ (M+H)⁺ 590.1. ¹H-NMR ((CD₃)₂CO + 3 drops D₂O, 300 MHz): 1.28 (3H, t *J*=7.0, O-CH₂CH₃); 4.15 (1H, d *J*=1.8 Hz, 4-H 3, 4-*trans* configuration); 4.29 (2H, quadruplet *J*=7.0, 1.8 Hz, O-CH₂₋CH₃); 4.77 (1H, m, S-CH₂-CH<); 5.28 (1H, 2m, 3-H); 5.36 (1H, bs, 2-H 2, 3-cis configuration); 6.01 (1H, d *J*=2.1 Hz, 6-H); 6.13 (1H, d *J*=2.1 Hz, 8-H); 6.79 (1H, d *J*=8.1 Hz, 5'-H); 6.88 (1H, dd *J*=8.4, 2.1 Hz, 6'-H); 6.96 (2H, s, gatloyl-H); 7.10 (1H, d *J*=1.8 Hz, 2'-H). Purity (>96%) was ascertained by RP-HPLC on the system described for compound of example 1.

### Purification of the N-acetyl-O-methyl-cysteinyl derivatives

The preparative RP-HPLC fractionation of the *N*-acetyl-*O*-methyl-cysteinyl conjugates of examples 4 to 6 was done directly from the depolymerised mixture under chromatographic conditions (6-20% CH₃CN over 54 min) similar to the conditions described for the ethyl-cysteine conjugates. Fractions of interest: fraction **IV**, 13-14% CH₃CN, compound of example 5; fraction V, 15-18% CH₃CN, compound of example 4; fraction **VI,** 18-19% CH₃CN, compound of example 6.

The **4** -[*S*-(*N*-acetyl-*O*-methyl-cysteinyl)flavan-3-ols were purified from fractions IV-VI by preparative RP-HPLC and identified by mass spectrometry and nuclear magnetic resonance.

### Example 4: 4 -[S-(N-acetyl-O-methyl-cysteinyl)]epicatechin

Fraction V (3.4 L) from reversed-phase fractionation was concentrated (1.5 L final volume) under vacuum to eliminate most of the CH₃CN, loaded onto the preparative cartridge and eluted using a CH₃CN gradient (6 to 22% over 60 min) in triethylamine phosphate pH 2.32 buffer, at a flow rate of 100 mL/min, with detection at 230 nm. The resulting fractions enriched with the compound of the title were pooled, diluted with water (1:1) and re-chromatographed on the same cartridge by a gradient (6 to 22% [D] over 30 min). Analysis of the fractions was accomplished under isocratic conditions in 0.10% (v/v) aqueous TFA/CH₃CN using the VYDAC™ C₁₈ column, solvent system, flow rate and detection described above with isocratic elution at 17% [D]. The pure fractions were pooled, diluted with water (1:1) and re-chromatographed on the same cartridge by a CH₃CN gradient (6 to 22% over 60 min) in triethylamine phosphate pH 5.66 buffer. The purest fractions were pooled and desalted by a fast CH₃CN gradient in 0.10% (v/v) aqueous TFA on the same cartridge. **4** -[*S*-(*N*-acetyl-*O*-methyl-cysteinyl)]epicatechin (818 mg) was obtained by lyophilization. ES-MS, negative ions, *m*/*z* 464.7 (M-1), calculated for C₂₁H₂₃N₁O₉S₁ (M-H) 464.5. ¹H-NMR ((CD₃)₂CO + 3 drops D₂O, 300 MHz): 2.05 (3H, s, CO-CH₃); 3.69 (3H, s, O-CH₃); 4.02 (1H, dd *J*=2.4, 1.2 Hz, 3-H 2, 3-cis configuration); 4.06 (1H, d *J*=2.4 Hz, 4-H 3, *4-trans* configuration); 4.94 (1H, m, S-CH₂-CH<); 5.22 (1H, s, 2-H); 5.89 (1H, d *J*=2.4 Hz, 8-H); 6.06 (1H, d *J*=2.4 Hz, 6-H); 6.81-6.83 (2H, m, 5'-H, 6'-H); 7.06 (1H, d *J*=2.1 Hz, 2'-H). Purity (>99%) was ascertained by RP-HPLC on the system described for compound of example 1.

### Example 5: 4 -[S-(N-acetyl-0-methyl-cysteinyl)Jcatechin

Fraction **IV** from reversed-phase fractionation was concentrated as stated in example 1, loaded onto the preparative cartridge and eluted using a CH₃CN gradient (6 to 22% over 60 min) in triethylamine phosphate pH 2.45 buffer, at a flow rate of 100 mL/min, with detection at 230 nm. Analysis of the fractions was accomplished under isocratic conditions in 0.10% (v/v) aqueous TFA/CH₃CN using the VYDAC™ C₁₈ column, solvent system, flow rate and detection described above with isocratic elution at 17% [D]. The best fractions were pooled, diluted, re-loaded onto the cartridge and eluted with a CH₃CN gradient (2 to 18% over 60 min) in triethylamine phosphate pH 4.90 buffer. The purest fractions were pooled, desalted with a steep CH₃CN gradient in 0.10% (v/v) aqueous TFA and lyophilised. Then the preparation was re-chromatographed on a semi-preparative Perkin-Elmer C18 cartridge eluted with 16% CH₃CN in 0.10% (v/v) aqueous TFA under isocratic conditions. After pooling the best fractions and lyophilization, 4 -[*S*-(*N*-acetyl-*O*-methyl-cysteinyl)]catechin (64 mg) was obtained. ES-MS, negative ions, m/z 464.9 (M-1), calculated for C₂₁H₂₃N₁O₉S₁ (M-H)⁻ 464.5. ¹H-NMR ((CD₃)₂CO + 3 drops D₂O, 300 MHz): 2.11 (3H, s, CO-CH₃); 3.65 (3H, s, O-CH₃); 4.15 (1H, 2d *J*= 9.6, 3.9 Hz, 3-H); 4.38 (1H, d J=3.9 Hz, 4-H 3, 4-cis configuration); 4.82 (1H, m, S-CH₂-CH<); 495 (1H, d J=9.6 Hz, 2-H 2, 3*-trans* configuration); 5.78 (1H, d *J*=2.4 Hz, 8-H); 6.06 (1H, d *J*=2.4 Hz, 6-H); 6.78 (2H, m, 5'-H, 6'-H); 6.92 (1H, s, 2'-H). Purity (99%) was ascertained by RP-HPLC on the system described for compound of example 1.

### Example 6: 4 -[S-(N-acetyl-0-methyl-cysteinyt)]epicatechin 3-O-gallate

Fraction **VI** from reversed-phase fractionation was concentrated as stated in example 1, loaded onto the preparative cartridge and eluted using a CH₃CN gradient (10 to 26% over 30 min) in 0.10% (v/v) aqueous TFA, at a flow rate of 100 mL/min, with detection at 230 nm. Fractions were analysed under isocratic conditions in 0.10% (v/v) aqueous TFA/CH₃CN using the column, solvent system, flow rate and detection described above with elution at 22% [D]. The best fractions were pooled, diluted, re-loaded onto the cartridge and eluted with a CH₃CN gradient (11 to 27% over 60 min) in triethylamine phosphate pH 5.0 buffer. The purest fractions were pooled and re-chromatographed with a 22% CH₃CN in 0.10% (v/v) aqueous TFA under isocratic conditions. After lyophilization, 4 -[S-(*N*-acetyl-*O*-methyl-cysteinyt)]epicatechin 3-*O*-gallate (88 mg) was obtained. ES-MS, negative ions, m/z 616.3 (M-1) calculated for C₂₈H₂₇N₁O₁₃S₁ (M-H)⁻ 616.6. ¹H-NMR ((CD₃)₂CO + 3 drops D₂O, 300 MHz): s, CO-CH₃); 3.71 (3H, s, O-CH₃); 4.26 (1 H, d *J*=2.4 Hz, 4-H 3, 4-*trans* configuration); 5.01 (1H, m, S-CH₂-CH<); 5.21 (1H, m, 3-H); 5.48 (1H, bs, 2-H 2, 3-*cis* configuration); 6.01 (1H, d *J*=2.4 Hz, 8-H); 6.07 (1H, d *J*=2.4 Hz, 6-H); 6.78 (1H, d *J*=8.1 Hz, 5'-H); 6.89 (1H, dd *J*=8.1, 2.1 Hz, 6'-H); 6.96 (2H, s, galloyl-H); 7.08 (1H, d *J*=2.1 Hz, 2'-H). Purity (95%) was ascertained by RP-HPLC on the system described for compound of example 1.

### Example 7: Effect of supplementation with 4-thioderivative of flavan-3-ol on postthaw sperm function in comparison with the effect of a natural flavan-3-ol

### Introduction:

This example provides a comparison between the effect on postthaw sperm of supplementing the freezing media with a natural flavan-3-ol and with 4-thioderivatives thereof according to the invention.

It shows that (-)-epicatechin, a natural flavan-3-ol, exerts no significant protection, evaluated in terms of sperm motility, at a concentrations ranging from 1 to 100 µg/mL. In contrast and surprisingly, it also shows that 4-thioderivatives of said flavan-3-ol according to the invention may exert a protection improvement of around 40% at low concentration of 50 microg/mL or 100 microM, with very high confidence (p less than 0.001).

### Material and methods

Aliquots of 50 µL of solutions of different 4-thioderivative of flavan-3-ol of formula (I) of the invention dissolved in PureSperm Wash media (Nidacon International, Sweeden), were added to 0.95 mL of the spermatozoa suspension (50 millions/mL) in CryoProtec freezing media (Nidacon International, Sweeden) in 1.8 mL Nunc vials in order to obtain final concentrations of 1, 10, 25, 50 y 100 µg/mL. Aliquots of 50 µL of solutions of (-)-epicatechin, a natural flavan-3-ol, were treated in the same way. As a control, 50µL of PureSperm Wash media (Nidacon International) were added instead of the solutions of the compounds of the invention (0 µg/mL). The percentage of motile cells in the different cellular suspensions was analyzed by CASA (Computer-Assisted Sperm Analysis) using an IVOS-IDENT (Hamilton-Thorn, Beverly, MA).

The cellular suspensions were processed for freezing using a standard freezing gradient as follows: cooling from room temperature to 4°C in 30 min, from 4°C to 0°C in 3 min and immediately transferred to liquid nitrogen tanks. After at least 24 h in liquid nitrogen, the samples were thawed in a water bath at 37°C.

### Results

The percentage of motile spermatozoa in the different samples obtained above was analyzed by CASA. Since vials corresponding to the different compounds were in different boxes inside the nitrogen tanks, a control was used for each group of compounds.

Results are shown in table 1. Values are the mean + SD from a total of 5 experiments per concentration.

**Table 1**

| Compounds tested | Percentage of motile spermatozoa | | | | | |
|---|---|---|---|---|---|---|
| Concentration of compounds tested | 0 µg/mL | 1 µg/mL | 10 µg/mL | 25 µg/mL | 50 µg/mL | 100 µg/mL |
| Example 4 | 47,6 +3,3 | 47,6 +3,7 | 49,8 +3,0 | 54,8+ 5,2* | 59,4+ 3,3** | 59,2+ 2,8** |
| 4β-(*S*- cysteinyl)epica techin | 48,6 +4,0 | 47,6 +3,0 | 52,0 +2,3 | 61,8+ 2,6** | 69,8+ 3,2** | 70,2+ 2,8** |
| (-)- epicatechin | 48,6 +3,5 | 46,8 +1,9 | 47,0 +2,2 | 47,6+ 3,2 | 47,4+ 2,6 | 46,8+ 1,3 |

| | | | | | | |
|---|---|---|---|---|---|---|
| *p<0.05; **p<0.001. | | | | | | |

The results indicate that supplementation of the cryopreservation medium Cryoprotec with compounds of example 4 and 4β-(*S*-cysteinyl)epicatechin (described in the example of international application WO 03024951) at concentrations of 25, 50 and 100 µg/mL resulted in a significant increase in post-thaw motility recovery as compared to control (p<0.001). This increase in motility applies only to the high motility grades "a" and "b". In addition, velocity parameters, including linear velocity (VSL) and lateral head displacement (AHL), which reflect high-quality motility, were significantly higher with these compounds. No significant differences in post-thaw motility recovery were found between (-)-epicatechin and control.

### Example 8: Effect of supplementation with 4-thioderivative of flavan-3-ol on postthaw mouse oocytes and mouse embryos

The protective effect of the additives on oocyte and embryo quality, following cryopreservation, is tested using mouse oocytes and mouse embryos (Embryotech Laboratories, Wilmington, MA). In brief, oocytes and embryos are frozen in medium containing different concentrations of the additive, and oocyte and embryo viability monitored by phase-contrast microscopy following thawing.

Particularly for embryos, viability and quality is ascertained by a correct embryo cell division rate during culture time, which should be: day 1, two-cell stage, day 2, four-cell stage; day 3, eight-cell stage; and day 4, blastocyst stage.

## Claims

1. A medium for storing a biological sample in a refrigerated, frozen or vitrified state, comprising a balanced salt solution and a 4-thioderivative of flavan-3-ol of formula (1) with cryoprotective effect: 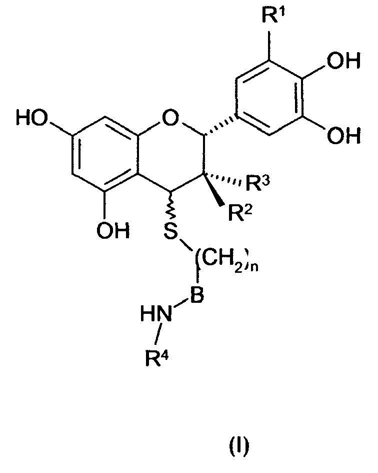
Wherein:
R¹, and R² are independently from one another, equal or different, H or OH.
R³ is different from R², and is H, OH or a group of formula: 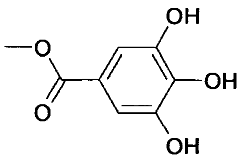
B = single bond or 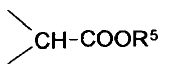
n=1-6
R⁴= H, -C(O)-R⁶, linear or branched C₁-C₄ alkyl, or a natural aminoacid selected from the group consisting of atanine, aspartic acid, glutamic acid, phenylalanine, glycine, histidine, isoleucine, lysine, leucine, methionine, asparagine, proline, glutamine, arginine, serine, threonine, valine, tryptophan, tyrosine;
R⁵ = H, linear or branched C₁-C₄ alkyl, or a natural aminoacid selected from the group consisting of alanine, aspartic acid, glutamic acid, phenylalanine, glycine, histidine, isoleucine, lysine, leucine, methionine, asparagine, proline, glutamine, arginine, serine, threonine, valine, tryptophan, tyrosine;
R⁶ = linear or branched C₁-C₄ alkyl;
or a salt thereof, at a concentration sufficient to reduce cellular damage after storage in a refrigerated, frozen or vitrified state.

2. The medium according to claim 1, further comprising a cryoprotectant, such as DMSO, glycerol, propylene glycol, ethylene glycol or egg-yolk.

3. The medium according to any of claims 1 or 2, wherein said biological sample are animal or human cells.

4. A medium according to claim 3, wherein said human or animal cetts are selected from the group consisting of: sperm, oocyte, embryo and stem cell.

5. A medium according to claim 1, wherein when B of formula (I) is a single bond then n is 2 and when B is 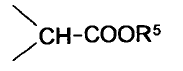
n is 1.

6. A medium according to claim 1, wherein said 4-thioderivative of flavan-3-ol of formula (I) is selected from the group consisting of 4β-[*S*-(*N*-acetyl-*O*-methyl-cysteinyl)]epicatechin and 4B-(S-cysteinyt)epicatechin.

7. A method for reducing cellular damage to a biological sample, resulting from storage of said sample in a refrigerated, frozen or vitrified state, comprising the steps of
(a) combining a medium according to any of the preceding claims, and said biological sample, wherein said derivative of flavan-3-ol is in an amount effective to reduce said damage; and
(b) storing said sample in a refrigerated, frozen or vitrified state.

8. The method according to claim 7, wherein said human or animal cells are selected from the group consisting of: sperm, oocyte, embryo and stem cell.

9. The method according to claims 7 or 8, wherein the amount of the derivative of flavan-3-ol is at a concentration of the derivatives of flavan-3-ol from 15 µg/mL to 500 µg/mL (measured in the stored sample).

10. The method according to any of claims 7 to 9, wherein the reduction of cell damage after storage represents an improvement of at least 10% as compared to storage under identical conditions in an identical control storage media without the derivatives of flavan-3-ol.
